# DEMANDE DE BREVET EUROPEEN

(11) **EP 1 353 151 A1**
(43) Date de publication de la demande: **15.10.2003**
(21) Numéro de dépôt: 02290888.3
(22) Date de dépôt: 09.04.2002
(51) Int. Cl.: G01D 5/14, G01D 5/249

(54) **Capteur de position absolue à barrette d'éléments à effet hall**

(71) Demandeur: SNR ROULEMENTS, F-74000 Annecy (FR)
(72) Inventeur: Santos, John A., Farmington, CT 06032 (US)
(74) Mandataire: Ballot, Paul

(57) **Abrégé**

Un capteur de position absolue comprenant une première rangée d'aimants comportant un premier nombre prédéterminé d'aimants et une deuxième rangée d'aimants alignée avec la première rangée d'aimants comportant un deuxième nombre prédéterminé d'aimants. Le deuxième nombre prédéterminé d'aimants est différent du premier nombre prédéterminé d'aimants. Un capteur pour déterminer une position sur chaque aimant de la première rangée d'aimants est incorporé. Un capteur pour déterminer une position sur chaque aimant de la deuxième rangée d'aimants est également incorporé. Un circuit est prévu pour comparer la position sur chaque aimant de la première rangée d'aimants et la position sur chaque aimant de la deuxième rangée d'aimants afin de déterminer une position absolue de la première rangée d'aimants. Un procédé pour déterminer une position absolue comprend la prévision d'une première rangée d'aimants comportant un premier nombre prédéterminé d'aimants et la prévision d'une deuxième rangée d'aimants alignée avec la première rangée d'aimants.

## Description

### CONTEXTE DE L'INVENTION

### Domaine de l'invention

La présente invention concerne, généralement, l'utilisation de capteurs magnétiques pour déterminer la position absolue d'une cible comportant des pôles magnétiques et, plus particulièrement, l'utilisation de multiples agencements, comportant chacun une pluralité de capteurs magnétiques afin de déterminer la position absolue de la cible.

### Art connexe

Pour la détermination de la position d'une cible, de multiples capteurs magnétiques ont été placés à proximité d'un aimant à pôles multiples. Dans le passé, des barrettes de dispositifs à effet Hall ont été utilisées pour fournir des signaux qui sont additionnés afin de produire une onde sinusoïdale qui est représentative du champ magnétique moyen sur l'aimant à pôles multiples. L'addition des signaux provenant des éléments de capteur de la première moitié de la barrette d'éléments à effet Hall soustraite à la somme des signaux provenant des éléments de capteur de la deuxième moitié de la barrette d'éléments à effet Hall produit une onde cosinusoïdale. Les ondes sinusoïdale et cosinusoïdale peuvent ensuite être utilisées afin de déterminer la position d'une cible pourvue de l'aimant à pôles multiples.

Ces dispositifs sont utiles pour réduire les erreurs lors de la détermination de la position de la cible qui sont dues à des variations des champs magnétiques ou à l'espacement des pôles magnétiques. Cependant, ces dispositifs et procédés connus ont des exigences quant à la barrette de dispositifs de détection. L'exigence est qu'ils aient une longueur qui corresponde précisément à l'espacement des pôles de l'aimant à pôles multiples avec lequel les capteurs magnétiques doivent être utilisés. En outre, des erreurs peuvent être provoquées par des champs magnétiques externes. Les champs externes polariseront le champ magnétique en augmentant les pôles magnétiques nord et en diminuant les pôles magnétiques sud ou vice-versa. Cela provoquera le décalage des courbes sinusoïdale et cosinusoïdale de sorte que les points de passage par zéro ne seront pas espacés régulièrement. Dans l'un ou l'autre cas, le traitement du signal des ondes sinusoïdale et cosinusoïdale produit des erreurs dans la mesure de position.

Plusieurs brevets américains illustrant l'art actuel ont été publiés, par exemple, le brevet américain n° 5 029 304, intitulé « Sensor With Absolute Digital Output Utilizing Hall Effect Devices », accordé à Robert J. Tolmie, Jr. et d'autres concerne un capteur pour déterminer la position ou les dimensions d'un objet qui comporte un ensemble de détecteurs et un milieu d'actionnement des détecteurs configuré de manière à ce que les détecteurs produisent un code binaire Gray absolu.

Le brevet américain n° 5 574 445, intitulé « Digital Absolute Position Encoders », accordé à Robert L. Maresca et d'autres, concerne un codeur de position pour déterminer la position absolue d'un premier élément par rapport à un deuxième élément. La position absolue est déterminée dans une cellule de résolution de L/2ⁿ où n est un entier et L est une étendue prédéterminée. Un des éléments comporte une pluralité de m pistes de marques binaires réparties sur l'étendue prédéterminée L, où m est un entier inférieur à n. L'autre élément comporte une pluralité de détecteurs de marques disposés sur le deuxième élément pour détecter les marques binaires. Avec un tel agencement, un codeur est prévu comportant un « code de distance unitaire », qui utilise cependant moins de pistes qu'un codeur à code Gray classique. Le codeur a également un nombre réduit de transitions par rapport à celles nécessaires sur la piste utilisée par le codeur à code Gray classique.

Ce qui précède illustre les limitations connues comme existant dans les dispositifs et les procédés actuels. Ainsi, il est évident qu'il serait avantageux de proposer une variante destinée à surmonter une ou plusieurs des limitations présentées ci-dessus. Par conséquent, une variante appropriée est proposée comprenant des caractéristiques plus totalement décrites ci-après.

### RESUME DE L'INVENTION

La présente invention propose un dispositif et un procédé pour déterminer la position absolue d'une cible. Un capteur de position absolue pour déterminer la position d'une cible comprend une première rangée d'aimants comportant un premier nombre prédéterminé d'aimants et une deuxième rangée d'aimants alignée avec la première rangée d'aimants comportant un deuxième nombre prédéterminé d'aimants. Le deuxième nombre prédéterminé d'aimants est différent du premier nombre prédéterminé d'aimants. Un capteur pour déterminer une position sur chaque aimant de la première rangée d'aimants est incorporé. Un capteur pour déterminer une position sur chaque aimant de la deuxième rangée d'aimants est également incorporé. Le circuit est prévu pour comparer la position sur chaque aimant de la première rangée d'aimants et la position sur chaque aimant de la deuxième rangée d'aimants afin de déterminer une position absolue de la première rangée d'aimants. En comparant les positions relatives sur les deux rangées d'aimants, la position sur la rangée d'aimants entière peut être déterminée par la quantité de décalage du positionnement des aimants de chaque rangée.

La présente invention propose également un procédé pour déterminer une position absolue d'une cible. Le procédé de la présente invention comprend la prévision d'une première rangée d'aimants comportant un premier nombre prédéterminé d'aimants et d'une deuxième rangée d'aimants alignée avec la première rangée d'aimants. La deuxième rangée d'aimants comporte un deuxième nombre prédéterminé d'aimants différent du premier nombre prédéterminé d'aimants de la première rangée. Une position sur chaque aimant de la première rangée d'aimants est déterminée. Une position sur chaque aimant de la deuxième rangée d'aimants est déterminée. La position sur chaque aimant de la première rangée d'aimants est comparée avec la position sur chaque aimant de la deuxième rangée d'aimants afin de déterminer une position absolue de la première rangée d'aimants.

### BREVE DESCRIPTION DES DESSINS

La figure 1 est une vue plane d'un système pour mesurer la position absolue d'une cible ;
la figure 2 est une vue plane d'un premier mode de réalisation de la présente invention illustrant deux rangées d'aimants disposées bout à bout ;
la figure 3 est une vue plane de la position de deux capteurs à effet Hall utilisés sur la figure 1 pour déterminer la position des aimants individuels dans chaque rangée d'aimants ;
la figure 4 est une vue plane d'un autre mode de réalisation de la présente invention illustrant deux rangées d'aimants configurées selon deux cercles concentriques ; et
la figure 5 est une illustration graphique de la sortie électrique pratiquement sinusoïdale des capteurs à effet Hall de la figure 4.

### DESCRIPTION DU MODE DE REALISATION PREFERE

La présente invention propose un procédé et un dispositif pour déterminer la position absolue d'une cible. La cible peut être la position sur un arbre rotatif ou n'importe quoi de similaire. L'importance de l'emplacement de rotation est capitale et le point exact peut être critique. Le capteur de position absolue de la présente invention peut être utilisé pour déterminer l'emplacement de rotation exact sur l'arbre ou l'emplacement exact de n'importe quel point sur un objet mobile.

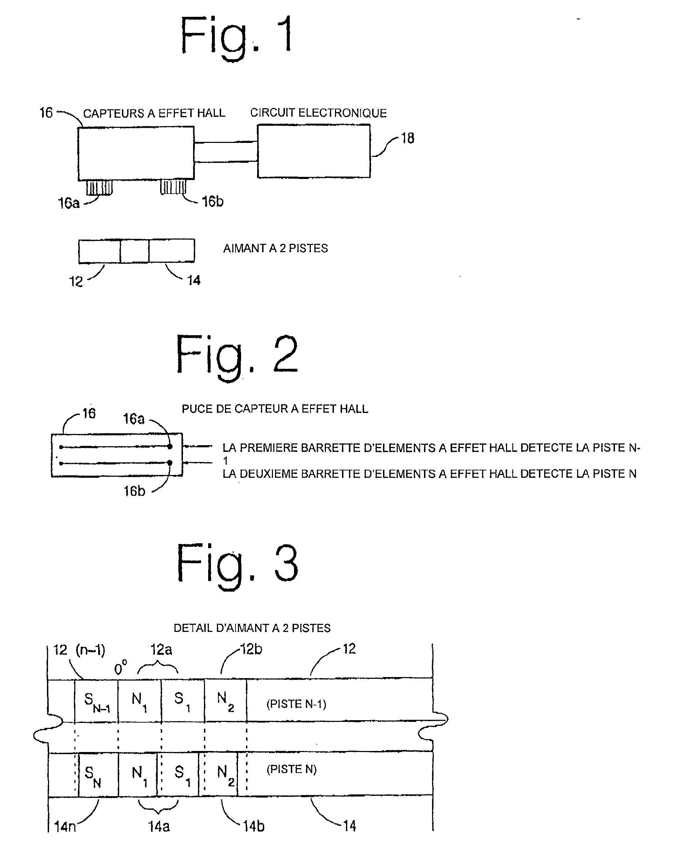

Un capteur de position absolue 10 est utilisé pour déterminer la position d'une cible telle qu'illustrée sur la figure 1. Le capteur de position 10 comprend une première rangée d'aimants 12, une deuxième rangée d'aimants 14, un capteur 16 comportant des capteurs 16A et 16B et un circuit électronique 18 pour traiter la sortie du capteur à effet Hall 16.

En faisant maintenant référence à la figure 2, l'agencement de deux rangées d'aimants, la rangée d'aimants 12 et la rangée d'aimants 14, est illustré. La première rangée d'aimants 12 comporte un premier nombre prédéterminé d'aimants, par exemple, une rangée de N-1 aimants, 12a ... 12N-1. Une deuxième rangée d'aimants 14 est alignée avec la première rangée d'aimants 12 comportant un deuxième nombre prédéterminé d'aimants, par exemple N aimants, 14a ... 14N. Le deuxième nombre prédéterminé d'aimants est différent du premier nombre prédéterminé d'aimants. Les deux rangées d'aimants sont exactement de la même longueur, avec des nombres d'aimants différents dans chaque rangée. Cette configuration permet de faire coïncider les rangées à la fois aux points de début et aux points de fin, mais d'avoir un décalage des pôles magnétiques le long des rangées. Dans le mode de réalisation préféré, les deux nombres prédéterminés diffèrent de 1, le premier étant N et le deuxième étant N-1.

La figure 3 illustre une vue plane du capteur 16, qui est de préférence une puce de capteur à effet Hall pour déterminer le flux magnétique à des positions le long de la rangée d'aimants 12 et de la rangée d'aimants 14. Le capteur 16 comprend un capteur 16A pour déterminer une position sur chaque aimant 12a, ... etc., de la première rangée d'aimants 12. Un capteur 16 comprend également un capteur 16B pour déterminer une position sur chaque aimant 14a, ... etc., de la deuxième rangée d'aimants 14.

En fonctionnement, une piste d'aimants, par exemple, la rangée d'aimants 12, peut être considérée comme la piste maître (piste N-1). Cette piste, la rangée d'aimants 12, est utilisée pour produire un signal de capteur à haute résolution. Le signal détecté par le capteur à barrette d'éléments à effet Hall 16 au niveau du capteur 16A peut être combiné afin de produire des sorties alors que chaque paire de pôles, 12a, ... passe devant le capteur. Cela divise efficacement chaque paire de pôles sur la piste N-1 en signaux qui représentent 1/(N-1) d'une longueur d'une paire de pôles ou moins.

La deuxième barrette d'éléments à effet Hall, la rangée d'aimants 14, peut être traitée d'une manière similaire avec pour objectif de comparer la position relative de la deuxième barrette d'éléments à effet Hall sur sa paire de pôles avec la position relative de la première barrette d'éléments à effet Hall sur sa paire de pôles. Le fait que chaque capteur à barrette d'éléments à effet Hall 16A et 16B détecte une série de paires de pôles qui n'ont pas la même longueur et qui sont alignées uniquement sur une position (0° mécanique) permet de déterminer la paire de pôles qui se trouve sous le capteur 16A de la barrette d'éléments à effet Hall. Le déphasage du deuxième signal de barrette détecté par le capteur 16B, lorsqu'il est comparé au premier signal de barrette détecté au niveau du capteur 16B, commencera à une valeur proche de 0 et se décalera de (N-1)/N à chaque paire de pôles jusqu'à ce que le décalage soit suffisant pour atteindre 360° électriques après une rotation complète.

Le circuit 18 est prévu pour comparer la position sur chaque aimant de la première rangée d'aimants 12 et la position sur chaque aimant de la deuxième rangée d'aimants 14 afin de déterminer une position absolue de la première rangée d'aimants 12. En comparant les positions relatives sur les deux rangées d'aimants, la position sur la rangée d'aimants entière peut être déterminée par la quantité de décalage du positionnement des aimants de chaque rangée. Le circuit électronique 18 peut être de n'importe quel type actuellement utilisé dans l'art, la seule exigence étant qu'il soit capable de recevoir deux entrées et de fournir une sortie indiquant une comparaison des deux entrées.

La position absolue du signal à haute résolution peut être déterminée en sachant quelle paire de pôles 12a, ... etc., se trouve sous le capteur 16A. L'électronique du circuit électronique 18 associée à la première barrette d'éléments à effet Hall, la rangée d'aimants 12, doit être capable de déterminer la position absolue dans la paire de pôles actuellement sous le capteur 16A.

En combinant les informations consistant en la position absolue de la paire de pôles, 12a, ... etc., sous le premier capteur à barrette d'éléments à effet Hall 16A avec l'identité de la paire de pôles 12a, ... etc., sous le premier capteur à barrette d'éléments à effet Hall 16A, une position absolue très précise peut être déterminée sur un tour complet. Du point de vue pratique, il peut être souhaitable de programmer une valeur de décalage initiale pour ajuster électriquement le point à 0° où les pistes N-1 et N coïncident.

La présente invention propose également un procédé pour déterminer une position absolue d'une cible. Le procédé de la présente invention comprend la prévision d'une première rangée d'aimants 12 comportant un premier nombre prédéterminé d'aimants et une deuxième rangée d'aimants 14 alignée avec la première rangée d'aimants 14. La première rangée d'aimants 12 et la deuxième rangée d'aimants 14 ont toutes deux la même longueur. Cependant, la deuxième rangée d'aimants 14 comporte également un nombre prédéterminé d'aimants, mais il est différent du premier nombre prédéterminé d'aimants de la première rangée d'aimants 12. Une position sur chaque aimant, 12a, ... etc., de la première rangée d'aimants 12 est déterminée. Une position sur chaque aimant 14a, ... etc., de la deuxième rangée d'aimants 14 est déterminée. La position sur chaque aimant de la première rangée d'aimants 12 est comparée à la position sur chaque aimant de la deuxième rangée d'aimants 14 afin de déterminer une position absolue de la première rangée d'aimants 12.

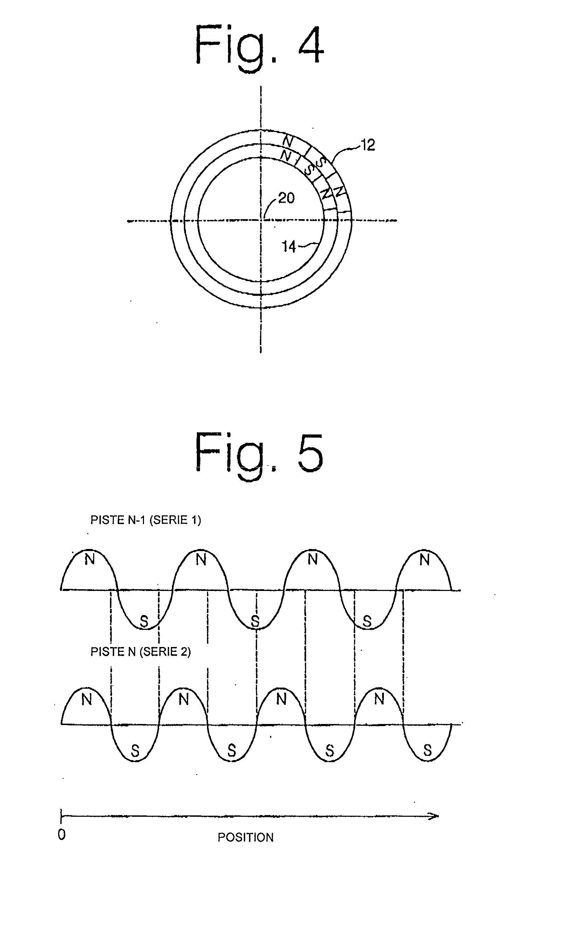

En faisant maintenant référence à la figure 4, un autre mode de réalisation de la présente invention est illustré. La rangée d'aimants 12 forme un cercle avec son centre au point 20. La rangée d'aimants 14 forme également un cercle avec son centre au point 20. La rangée d'aimants 12 et la rangée d'aimants 14 sont disposées côte à côte afin de former deux cercles concentriques. Une puce de capteur 16 peut être placée directement au-dessus de la rangée d'aimants 12 et de la rangée d'aimants 14 pour effectuer des lectures du flux magnétique comme dans le premier mode de réalisation. Le circuit électronique 18 est également identique à celui du premier mode de réalisation, un circuit capable de recevoir deux sorties différentes et de produire une réponse ou une sortie indicative de la différence dans les deux entrées.

La figure 5 est une illustration graphique des sorties des capteurs à barrette d'éléments à effet Hall 16A et 16B. Comme on peut le voir, les sorties sont similaires, les aimants individuels 12a, ... etc., et 14a, ... etc., respectivement, dans la rangée d'aimants 12 et dans la rangée d'aimants 14, étant de forme similaire et proches les unes des autres du point de vue dimension, la dimension des aimants individuels variant uniquement légèrement entre la rangée d'aimants 12 et la rangée d'aimants 14. Cependant, on peut voir que les sorties des capteurs 16A et 16B sont légèrement déphasées, la montée de la sortie électrique de la rangée d'aimants 12 (N-1) étant en retard par rapport à la montée de la sortie électrique de la rangée d'aimants 14 (N). Ceci est dû à la longueur accrue des aimants 12a, ... etc., dans la rangée d'aimants 12 pour couvrir la même longueur que la rangée d'aimants 14, mais avec moins d'aimants ((N-1) comparé à N).

La présente invention propose un capteur de vitesse et de position à effet Hall qui a également la capacité de détecter une position absolue. L'utilisation de deux agencements linéaires ou incurvés côte à côte de capteurs à effet Hall, chaque agencement détectant une piste magnétique avec des positions uniques et/ou des pôles dimensionnés. Cette combinaison d'aimants et de capteurs produira des signaux qui contiennent les informations nécessaires pour déterminer la position absolue de l'aimant sur un tour avec un niveau élevé de précision et de répétabilité.

Bien qu'un mode de réalisation particulier de la présente invention ait été illustré et décrit, on se rendra compte que de nombreuses variantes et modifications viendront à l'esprit des hommes du métier et que les revendications jointes sont destinées à couvrir toutes les variantes et modifications qui tombent dans l'esprit et l'étendue véritables de la présente invention.

## Revendications

1. Capteur de position absolue comprenant :
une première rangée d'aimants comportant un premier nombre prédéterminé d'aimants ;
une deuxième rangée d'aimants alignée avec ladite première rangée d'aimants comportant un deuxième nombre prédéterminé d'aimants, ledit deuxième nombre prédéterminé étant différent dudit premier nombre prédéterminé ;
un premier capteur pour déterminer une position sur chaque aimant de ladite première rangée d'aimants ;
un deuxième capteur pour déterminer une position sur chaque aimant de ladite deuxième rangée d'aimants ; et
un circuit pour comparer ladite position sur chaque aimant de ladite première rangée d'aimants et ladite position sur chaque aimant de ladite deuxième rangée d'aimants afin de déterminer une position absolue de ladite première rangée d'aimants.

2. Capteur de position absolue selon la revendication 1, dans lequel ladite première rangée d'aimants et ladite deuxième rangée d'aimants sont juxtaposées linéairement l'une à l'autre.

3. Capteur de position absolue selon la revendication 2, dans lequel ledit premier nombre prédéterminé est N.

4. Capteur de position absolue selon la revendication 3, dans lequel ledit deuxième nombre prédéterminé est N-1.

5. Capteur de position absolue selon la revendication 3, dans lequel ledit deuxième nombre prédéterminé est N+1.

6. Capteur de position absolue selon la revendication 2, dans lequel ledit premier capteur est un capteur à effet Hall.

7. Capteur de position absolue selon la revendication 6, dans lequel ledit deuxième capteur est un capteur à effet Hall.

8. Capteur de position absolue selon la revendication 1, dans lequel ladite première rangée d'aimants et ladite deuxième rangée d'aimants forment des cercles concentriques.

9. Capteur de position absolue selon la revendication 8, dans lequel ledit premier nombre prédéterminé est N.

10. Capteur de position absolue selon la revendication 9, dans lequel ledit deuxième nombre prédéterminé est N-1.

11. Capteur de position absolue selon la revendication 9, dans lequel ledit deuxième nombre prédéterminé est N+1.

12. Capteur de position absolue selon la revendication 8, dans lequel ledit premier capteur est un capteur à effet Hall.

13. Capteur de position absolue selon la revendication 12, dans lequel ledit deuxième capteur est un capteur à effet Hall.

14. Procédé pour déterminer une position absolue comprenant :
la prévision d'une première rangée d'aimants comportant un premier nombre prédéterminé d'aimants ;
la prévision d'une deuxième rangée d'aimants alignée avec ladite première rangée d'aimants comportant un deuxième nombre prédéterminé d'aimants, ledit deuxième nombre prédéterminé étant différent dudit premier nombre prédéterminé ;
la détermination d'une position sur chaque aimant de ladite première rangée d'aimants ;
la détermination d'une position sur chaque aimant de ladite deuxième rangée d'aimants ; et
la comparaison de ladite position sur chaque aimant de ladite première rangée d'aimants et de ladite position sur chaque aimant de ladite deuxième rangée d'aimants afin de déterminer une position absolue de ladite première rangée d'aimants.

15. Procédé selon la revendication 14 comprenant également la configuration de ladite première rangée d'aimants et de ladite deuxième rangée d'aimants en deux rangées directement côte à côte.

16. Procédé selon la revendication 14 comprenant également la configuration de ladite première rangée d'aimants et de ladite deuxième rangée d'aimants en cercles concentriques juxtaposés.

17. Procédé de détermination d'une position absolue comprenant :
la prévision de deux rangées côte à côte d'aimants individuels, une rangée d'aimants comportant un nombre d'aimants différent de l'autre ; la détermination de l'emplacement d'un capteur par rapport aux aimants individuels sur chaque rangée d'aimants ; et
la comparaison de l'emplacement sur chaque aimant individuel de chaque rangée d'aimants afin de déterminer la position absolue des rangées d'aimants par rapport aux capteurs.

18. Procédé selon la revendication 17, dans lequel ladite prévision comprend la configuration desdites rangées d'aimants de manière à ce qu'elles s'étendent linéairement.

19. Procédé selon la revendication 17, dans lequel ladite étape de prévision comprend la configuration desdites rangées d'aimants en cercles concentriques.

20. Dispositif pour déterminer une position absolue comprenant :
une première rangée d'aimants ayant une longueur L1 et un premier nombre prédéterminé d'aimants ;
une deuxième rangée d'aimants ayant une longueur L2 et un deuxième nombre prédéterminé d'aimants différent dudit premier nombre prédéterminé ;
des capteurs à effet Hall pour déterminer les positions du capteur sur les aimants individuels ; et
un circuit pour comparer lesdites positions sur lesdits aimants individuels afin de déterminer la position absolue de ladite première rangée d'aimants.
